# EUROPÄISCHE PATENTSCHRIFT

(11) **EP 1 257 602 B1**
(45) Veröffentlichungstag und Bekanntmachung des Hinweises auf die Patenterteilung: **12.11.2003**
(21) Anmeldenummer: 01902395.1
(22) Anmeldetag: 02.02.2001
(51) Int. Cl.: C09B 45/01, C09B 41/00, B01J 19/00

(54) **VERFAHREN ZUR HERSTELLUNG VON AZOFARBMITTELN IN MIKROREAKTOREN**
METHOD FOR PRODUCTION OF AZO DYES IN MICROREACTORS
PROCEDE DE PRODUCTION DE COLORANTS AZOIQUES DANS DES MICROREACTEURS

(30) Priorität: 09.02.2000 DE 10005550; 16.08.2000 DE 10040100
(43) Veröffentlichungstag der Anmeldung: 20.11.2002
(73) Patentinhaber: CLARIANT INTERNATIONAL LTD., 4132 Muttenz (CH)
(72) Erfinder: NICKEL, Uwe, 61352 Bad Homburg (DE); JUNG, Rüdiger, 65779 Kelkheim (DE); SAITMACHER, Klaus, 65830 Kriftel (DE); UNVERDORBEN, Leonhard, 61130 Nidderau (DE)
(74) Vertreter: Hütter, Klaus, Dr.
(86) Internationale Anmeldenummer: EP0101137
(87) Internationale Veröffentlichungsnummer: WO01059013

(56) Entgegenhaltungen:
- EP-A- 0 006 190
- EP-A- 0 244 686
- DD-A- 246 257
- DE-A- 3 926 466
- US-A- 5 534 328

## Beschreibung

Die vorliegende Erfindung liegt auf dem Gebiet der Azofarbmittel.
Azofarbmittel werden technisch konventionell im Batch-Verfahren in Reaktionskesseln durch Zusammenmischen der Ausgangsstoffe in wässriger Phase hergestellt (Fisher, Organische Chemie, Verlag Chemie, Weinheim/Bergstraße, 1965, S. 890 ff., 1431, 1796 ff.).

Ein anderes Verfahren ist das kontinuierliche Mischen von äquivalenten Mengen der Ausgangsprodukte in Form wässrig-saurer oder wässrig-alkalischer Lösungen in z.B. Mischdüsen und Durchflußreaktoren, ggf. mit einer Nachreaktionsphase in einem Reaktionskessel (Azokupplung: DE 1 544 453, EP 244 686; Diazotierung: EP-A-0 006 190).

Die prinzipiellen Verfahrensschritte sind dabei die Diazotierung aromatischer oder hetero-aromatischer Amine und die Azokupplungsreaktion. Bei bestimmten Azopigmenten kann anschließend noch eine Metallaustauschreaktion (Verlackung) und/oder eine Nachbehandlung in Wasser/Lösungsmitteln zur Erzielung der gewünschten Kristalleigenschaften erforderlich sein. Bei einigen Azofarbstoffen schließt sich eine Reaktion unter Bildung von Metallkomplexen an.

In allen diesen Verfahren ist die Kontrolle der Verfahrensparameter, wie Temperatur, Zeit und bei Azopigmenten außerdem insbesondere die Durchmischung, wesentlich für die Reinheit, Qualität und die Qualitätskonstanz der Produkte. Eine Schwierigkeit bei diesen Verfahren ist das scale-up von neuen Produkten aus dem Labormaßstab in den großtechnischen Maßstab.

Der vorliegenden Erfindung lag daher die Aufgabe zugrunde, ein Verfahren zur Herstellung von Azofarbmitteln zu finden, bei dem sich die Verfahrensparameter optimal beherrschen lassen, eine verbesserte Durchmischung der Reaktanden gegeben ist und das scale-up einfach zu bewerkstelligen ist.
Aus der DD 246 257 A1 ist bekannt, dass miniaturisierte verfahrenstechnische Apparaturen für chemische Reaktionen eingesetzt werden können, bei denen die zu behandelnden Stoffe nur in geringen Mengen zur Verfügung stehen oder diese Stoffe sehr teuer sind, so dass man sich große Totvolumina in den verfahrenstechnischen Apparaturen nicht leisten kann. In der DE 3 926 466 C2 werden chemische Reaktionen von zwei chemischen Stoffen mit starker Wärmetönung in einem Mikroreaktor beschrieben.

Mikroreaktoren zur Durchführung chemischer Reaktionen sind aus Stapeln von strukturierten Platten aufgebaut und in der DE 39 26 466 C2 und US 5,534,328 beschrieben. In der US 5,811,062 wird darauf hingewiesen, dass Mikrokanal-Reaktoren vorzugsweise für Reaktionen benutzt werden, die keine Materialien oder Feststoffe benötigen oder produzieren, die die Mikrokanäle verstopfen können.

Es wurde nun gefunden, dass sich Mikroreaktoren überraschenderweise zur Durchführung von Diazotierungs- und Azokupplungs- sowie Metallaustauschreaktionen bzw. Metallkomplexierungsreaktionen zur Herstellung von Azofarbmitteln, wie Azopigmenten und Azofarbstoffen, eignen.

Die verwendete Bezeichnung Mikroreaktor steht dabei stellvertretend für Mikround Minireaktoren, die sich nur aufgrund der Dimensionen und Aufbau der Reaktionskanalstrukturen unterscheiden.

Beispielsweise können Mikroreaktoren, wie sie aus den angeführten Schriften oder aus Veröffentlichungen des Instituts für Mikrotechnik Mainz GmbH, Deutschland, bekannt sind, oder auch kommerziell erhältliche Mikroreaktoren, wie beispielsweise der auf Cytos™ basierende Selecto™ der Firma Cellular Process Chemistry GmbH, Frankfurt/Main, eingesetzt werden.

Gegenstand der Erfindung ist daher ein Verfahren zur Herstellung von Azofarbmitteln, dadurch gekennzeichnet, dass man einen oder mehrere der schritte wie die Diazotierung aromatischer oder heteroaromatischer Amine oder die Azokupplungsreaktion, oder die Metallaustauschreaktionen oder Metallkomplexierungsreaktionen, oder die Diazotierung und die Azokupplungsreaktion und die Metallaustausch- oder Metallkomplexierungsreaktionen in einem Mikroreaktor durchführt.

Zweckmäßigerweise wird dabei so verfahren, dass man die vorzugsweise wässrigen Lösungen oder Suspensionen der Ausgangsprodukte kontinuierlich und vorzugsweise in äquivalenten Mengen dem Mikroreaktor zuführt. Dabei können die in den klassischen Verfahren verwendeten Hilfsmittel wie Harze, Tenside und andere Additive ebenfalls in dem erfindungsgemäßen Verfahren eingesetzt werden.

Die Ausgangsprodukte für die Diazotierungsreaktion sind aromatische oder heteroaromatische Amine oder deren Ammoniumsalze, wie z.B. Anilin, 2-Nitroanilin, Anthranilsäuremethylester, 2,5-Dichloro-anilin, 2-Methyl-4-chloroanilin, 2-Chlor-anilin, 2-Trifluormethyl-4-chloroanilin, 2,4,5-Trichloroanilin; 3-Amino-4-methyl-benzamid, 2-Methyl-5-chloranilin, 4-Amino-3-chloro-N'methylbenzamid, o-Toluidin, o-Dianisidin, 2,2',5,5'-Tetrachlorbenzidin, 2-Amino-5-methyl-benzolsulfonsäure, 2-Amino-4-chloro-5-methyl-benzolsulfonsäure.

Von besonderem Interesse für Azopigmente sind folgende Aminkomponenten: 4-Methyl-2-nitro-phenylamin, 4-Chloro-2-nitro-phenylamin, 3,3'-Dichloro-biphenyl-4,4'-diamin, 3,3'-Dimethyl-biphenyl-4,4'-diamin, 4-Methoxy-2-nitro-phenylamin, 2-Methoxy-4-nitro-phenylamin, 4-Amino-2,5-dimethoxy-N-phenylbenzensulfonamid, 5-Amino-isophthalsäuredimethylester, Anthranilsäure, 2-Trifluoromethyl-phenylamin, 2-Amino-terephthalsäuredimethylester, 1,2-Bis-(2-Amino-phenoxy)-ethan, 2-Amino-terephthalsäuredi-isopropylester, 2-Amino-4-chloro-5-methyl-benzensulfonsäure, 2-Methoxyphenylamin, 4-(4-Aminobenzoylamino)-benzamid, 2,4-Dinitro-phenylamin, 3-Amino-4-methyl-benzamid, 3-Amino-4-chloro-benzamid, 3-Amino-4-chlor-benzoesäure, 4-Nitrophenylamin, 2,5-Dichloro-phenylamin, 4-Methyl-2-nitro-phenylamin, 2-Chloro-4-nitrophenylamin, 2-Methyl-5-nitro-phenylamin, 2-Methyl-4-nitro-phenylamin, 2-Methyl-5-nitro-phenylamin, 2-Amino-4-chloro-5-methyl-benzensulfonsäure, 2-Aminonaphthalin-1-sulfonsäure, 2-Amino-5-chloro-4-methyl-benzolsulfonsäure, 2-Amino-5-chloro-4-methyl-benzensulfonsäure, 2-Amino-5-methyl-benzolsulfonsäure, 2,4,5-Trichloro-phenylamin, 3-Amino-4-methoxy-N-phenyl-benzamid, 4-Aminobenzamid, 2-Amino-benzoesäure-methylester, 4-Amino-5-methoxy-2,N-dimethylbenzensulfonamid, 2-Amino-N-(2,5-dichloro-phenyl)-terephthalsäuremonomethyl ester, 2-Amino-benzoesäurebutylester, 2-Chloro-5-trifluoromethyl-phenylamin, 4-(3-Amino-4-methyl-benzoylamino)-benzensulfonsäure, 4-Amino-2,5-dichloro-N-methyl-benzensulfonamid, 4-Amino-2,5-dichloro-N,N-dimethyl-benzensulfonamid, 6-Amino-1H-chinazolin-2,4-dion, 4-(3-Amino-4-methoxy-benzoylamino)-benzamid, 4-Amino-2,5-dimethoxy-N-methyl-benzensulfonamid, 5-Aminobenzimidazolon, 6-Amino-7-methoxy-1,4-dihydro-chinoxalin-2,3-dion, 3-Amino-4-methylbenzoesäure-(2-chlorethylester), 3-Amino-4-chlor-benzoesäure-isopropylester, 3-Amino-4-chlor-benzotrifluorid, 3-Amino-4-methyl-benzoesäure-n-propylester, 2-Amino-naphthalin-3,6,8-trisulfonsäure, 2-Amino-naphthalin-4,6,8-trisulfonsäure, 2-Amino-naphthalin-4,8-disulfonsäure, 2-Amino-naphthalin-6,8-disulfonsäure, 2-Amino-8-hydroxy-naphthalin-6-sulfonsäure, 1-Amino-8-hydroxy-naphthalin-3,6-disulfonsäure, 1-Amino-2-hydroxy-benzol-5-sulfonsäure, 1-Amino-4-acetylaminobenzol-2-sulfonsäure, 2-Aminoanisol, 2-Aminomethoxybenzol-ω-methansulfonsäure, 2-Aminophenol-4-sulfonsäure, o-Anisidin-5-sulfonsäure, [2-(3-Amino-1,4-dimethoxy-benzensulfonyl)ethyl]-schwefelsäureester und [2-(1-Methyl-3-amino-4-methoxy-benzensulfonyl)ethyl]-schwefelsäureester.

Von besonderem Interesse für Azofarbstoffe sind folgende Aminkomponenten: [2-(4-Amino-benzensulfonyl)-ethyl]schwefelsäureester, [2-(4-Amino-5-methoxy-2-methyl-benzensulfonyl)-ethyl] schwefelsäureester, [2-(4-Amino-2,5-dimethoxybenzensulfonyl)-ethyl] schwefelsäureester, {2-[4-(5-Hydroxy-3-methyl-pyrazol-1-yl)-benzensulfonyl]-ethyl}schwefelsäureester, [2-(3-Amino-4-methoxybenzensulfonyl)-ethyl]schwefelsäureester, [2-(3-Amino-benzensulfonyl)-ethyl]schwefelsäureester.
Das zu diazotierende Amin oder dessen Ammoniumsalz, vorzugsweise dessen Hydrochlorid oder Sulfat, wird vorzugsweise in Wasser und/oder einem organischen Lösemittel gelöst oder suspendiert und die erhaltene Lösung oder Suspension kontinuierlich in den Mikroreaktor eingeleitet (Eduktstrom A). Gleichzeitig wird eine Lösung oder Suspension, vorzugsweise eine wässrige Lösung oder Suspension, eines Diazotierungsmittels, vorzugsweise NaNO₂ oder Nitrosylschwefelsäure, kontinuierlich in den Mikroreaktor eingeleitet (Eduktstrom B). Im Innern des Mikroreaktors werden Eduktstrom A und B kontinuierlich miteinander vermischt und zur Reaktion gebracht.

Die Ausgangsprodukte für Azokupplungsreaktionen sind Diazoniumsalze, beispielsweise wie vorstehend erwähnt oder hergestellt, und Kupplungskomponenten in Lösung oder Suspension.

Von besonderem Interesse für Azopigmente sind folgende Kupplungskomponenten:
Acetessigsäurearylide 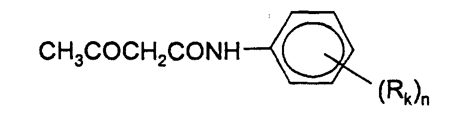 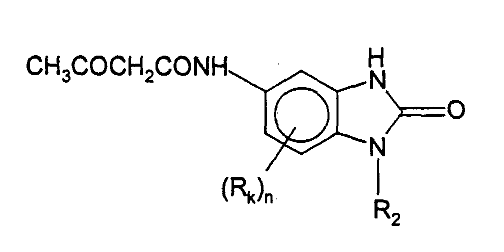 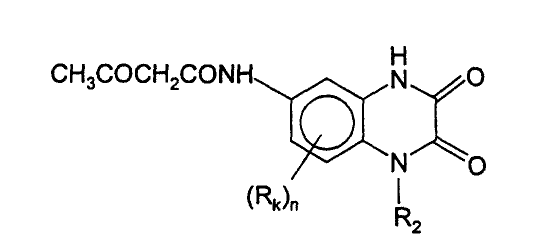 2-Hydroxynaphthaline 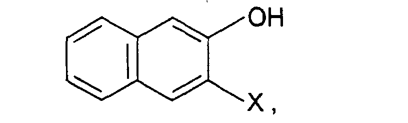 mit X = H, COOH, 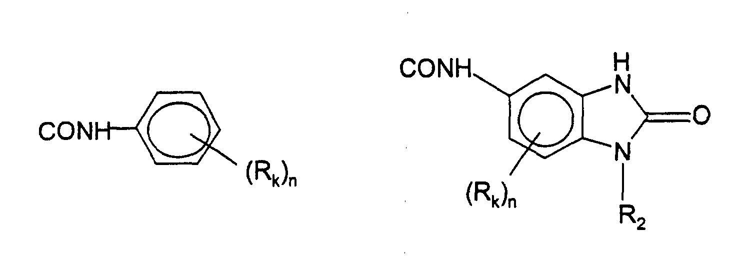 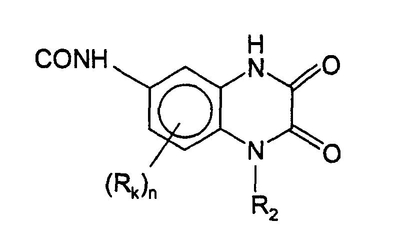 und Rₖ = CH₃, OCH₃, OC₂H₅, NO₂, Cl, NHCOCH₃ und n = 0 bis 3; sowie R₂= H, CH₃ und C₂H₅,
bisacetoacetylierte Diaminobenzole und -biphenyle, N,N'-Bis(3-hydroxy-2-naphthoyl)-phenylendiamine (jeweils ggfs. substituiert), sowie Pyrazolone 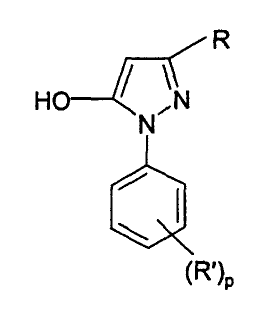 mit R = CH₃, COOCH₃, COOC₂H₅,
R' = CH₃, SO₃H, Cl;
p = 0 bis 3.

Von besonderem Interesse für Azofarbstoffe sind folgende Kupplungskomponenten:
4-[5-Hydroxy-3-methyl-pyrazol-1-yl]-benzensulfonsäure, 2-Amino-naphthalin-1,5-disulfonsäure, 5-Methoxy-2-methyl-4[3-oxo-butyrylamino]-benzensulfonsäure, 2-Methoxy-5-methyl-4-[3-oxo-butyrylamino]-benzensulfonsäure, 4-Acetylamino-2-amino-benzensulfonsäure, 4-[4-Chloro-6-(3-sulfo-phenylamino)-[1,3,5]-triazin-2-ylamino]-5-hydroxy-naphthalin-2,7-disulfonsäure, 4-Acetylamino-5-hydroxynaphthalin-2,7-disulfonsäure, 4-Amino-5-hydroxy-naphthalin-2,7-disulfonsäure, 5-Hydroxy-1-[4-sulfophenyl]-1H-pyrazol-3-carbonsäure, 2-Amino-naphthalin-6,8-disulfonsäure, 2-Amino-8-hydroxy-naphthalin-6-sulfonsäure, 1-Amino-8-hydroxynaphthalin-3,6-disulfonsäure, 2-Aminoanisol, 2-Aminomethoxybenzol-comethansulfonsäure und 1,3,5-Trishydroxybenzol.

Die Azokupplung erfolgt vorzugsweise in wässriger Lösung, es können aber auch organische Lösungsmittel, gegebenenfalls im Gemisch mit Wasser verwendet werden, beispielsweise aromatische Kohlenwasserstoffe, Chlorkohlenwasserstoffe, Glykolether, Nitrile, Ester, Dimethylformamid, Tetramethylharnstoff und N-Methylpyrrolidon.

Zur erfindungsgemäßen Durchführung der Azokupplungsreaktion wird eine Lösung oder Suspension des Diazoniumsalzes (Eduktstrom C) und eine Lösung oder Suspension der Kupplungskomponente (Eduktstrom D) kontinuierlich in den Mikroreaktor eingeleitet, dort miteinander kontinuierlich vermischt und zur Reaktion gebracht.

Die Ausgangsprodukte für die Verlackung sind säuregruppenhaltige Azofarbmittel in Form der freien Säuren oder ihrer z.B. Alkalisalze und Salze der Erdalkalimetalle, Ammoniumsalze oder Aluminium- oder Mangansalze.

Für die Verlackung von Azopigmenten wird eine Metallsalzlösung, z.B. eine wässrige Ca-, Sr-, Br- oder Mn-Salz-Lösung (Eduktstrom E) mit der Lösung oder Suspension eines säuregruppenhaltigen Azofarbmittels (Eduktstrom F) im Mikroreaktor vermischt und auf eine Temperatur zwischen 30 und 100°C gebracht. Die Verlackungsreaktion findet im Reaktor selbst statt oder wird dort gestartet. Zur Vervollständigung der Reaktion kann ein kontinuierlicher Rohrreaktor (Verweiler) nachgeschaltet werden.

Im Sinne der vorliegenden Erfindung kann sowohl die Diazotierung, die Azokupplungsreaktion als auch die Verlackungsreaktion oder die Metallkomplexierungsreaktion jeweils in (hintereinandergeschalteten) Mikroreaktoren durchgeführt werden, oder die Diazotierung wird auf herkömmlichem Wege durchgeführt und nur die Azokupplungsreaktion im Mikroreaktor durchgeführt, oder die Diazotierung wird im Mikroreaktor durchgeführt und die Azokupplung auf herkömmlichem Wege durchgeführt. Ebenso kann die Verlackung jeweils herkömmlich oder auch im Mikroreaktor durchgeführt werden. Es können auch Mikroreaktoren mit zwei oder mehreren Reaktionszonen für die einzelnen Reaktionsschritte verwendet werden.

Ein Mikroreaktor ist aus mehreren aufeinandergestapelten und miteinander verbundenen Plättchen aufgebaut, auf deren Oberflächen sich mikromechanisch erzeugte Strukturen befinden, die in ihrem Zusammenwirken Reaktionsräume bilden, um chemische Reaktionen auszuführen. Es ist wenigstens ein durch das System hindurchführender Kanal enthalten, der mit dem Einlass und dem Auslass verbunden ist.

Die Flussraten der Materialströme sind apparativ limitiert, beispielsweise durch die sich je nach geometrischer Auslegung des Mikroreaktors einstellenden Drücke. Es ist wünschenswert, dass die Reaktion im Mikroreaktor vollständig abläuft, es kann sich aber auch eine Verweilzone anschließen, um eine gegebenenfalls erforderliche Verweilzeit zu schaffen.

Die Flussraten sind zweckmäßigerweise zwischen 0,05 und 5 l/min, bevorzugt zwischen 0,05 und 500 ml/min, besonders bevorzugt zwischen 0,05 und 250 ml/min, und insbesondere zwischen 0,1 und 100 ml/min.

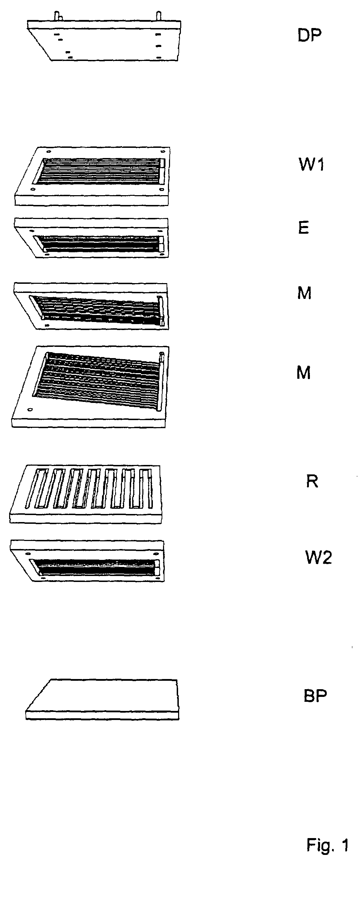

Beispielhaft wird in Figur 1 ein für die Herstellung von Azofarbmitteln einsetzbarer Mikroreaktor beschrieben.

Das vorliegende Mikroreaktionssystem ist ein aus sechs, aufeinander gestapelten und miteinander verbundenen mikrostrukturierten Blechlagen und je einer Deckelplatte (DP) und Bodenplatte (BP) aufgebautes verfahrenstechnisches Modul, das durch den Zusammenbau unter Druck gehalten oder fest verbunden wird, um Abdichtflächen zwischen den Platten zusammenzupressen.

Das vorliegende Mikroreaktionssystem beinhaltet zwei Wärmetauscher für Kühlund/oder Heizmedium, eine Mischzone für die Vermischung der Reaktanden sowie eine kurze Verweilstrecke.
Mit Hilfe des Wärmetauschers (W1) werden die in Platte (E) getrennt einströmenden Eduktströme vortemperiert. In den Platten (M), die ein gemeinsames Volumen bilden, findet dann die Vermischung der Eduktströme statt. In der Verweilzone (R) wird das Reaktionsgemisch mit Hilfe des Wärmetauschers (W2) auf die gewünschte Reaktionstemperatur gebracht, so dass die gewünschte chemische Reaktion stattfinden kann.
Das Mikroreaktionssystem wird kontinuierlich betrieben, wobei sich die jeweils miteinander zur Vermischung gebrachten Fluidmengen im Mikro- (µl) bis Milliliter (ml) -Bereich bewegen.
Entscheidend für die Herstellung von Azofarbmitteln in diesem Mikroreaktionssystem sind die Dimensionen der mikrostrukturierten Bereiche innerhalb des Reaktors. Diese müssen so groß gewählt sein, dass insbesondere Feststoffteilchen problemlos passieren können und so keine Verstopfung der Kanäle auftritt. Die kleinste lichte Weite der Mikrostrukturen sollte ca. zehnmal größer sein als der Durchmesser der größten Pigmentteilchen. Weiterhin muss durch entsprechende geometrische Gestaltung Sorge getragen werden, dass keine Totwasserzonen, wie z.B. Sackgassen oder scharfe Ecken, in denen z.B. Pigmentteilchen sedimentieren können, vorhanden sind. Bevorzugt sind daher kontinuierliche Bahnen mit runden Ecken. Die Strukturen müssen klein genug sein, um die immanenten Vorteile der Mikroreaktionstechnik auszunutzen, nämlich hervorragende Wärmekontrolle, laminare Strömung, diffusives Mischen und geringes internes Volumen.

Die lichte Weite der lösungs- oder suspensionsführenden Kanäle beträgt zweckmäßigerweise 5 bis 10000 µm, vorzugsweise 5 bis 2000 µm, besonders bevorzugt 10 bis 800 µm, insbesondere 20 bis 700 µm.

Die lichte Weite der Wärmetauscherkanäle richtet sich in erster Linie nach der lichten Weite der flüssigkeits- oder suspensionsführenden Kanäle und ist zweckmäßigerweise kleiner oder gleich 10000 µm, vorzugsweise kleiner oder gleich 2000 µm, insbesondere kleiner oder gleich 800 µm. Die Untergrenze der lichten Weite der Wärmetauscherkanäle ist unkritisch und wird allenfalls durch den Druckanstieg der zu pumpenden Wärmetauscherflüssigkeit und von der Notwendigkeit der optimalen Wärmezufuhr oder -abfuhr begrenzt.

Die Dimensionen des verwendeten Mikroreaktionssystems sind:
- Wärmetauscherstrukturen:: Kanalbreite ∼600 µm
Kanalhöhe ∼250 µm
- Mischer und Verweilzeit:: Kanalbreite ∼600 µm
Kanalhöhe -500 µm

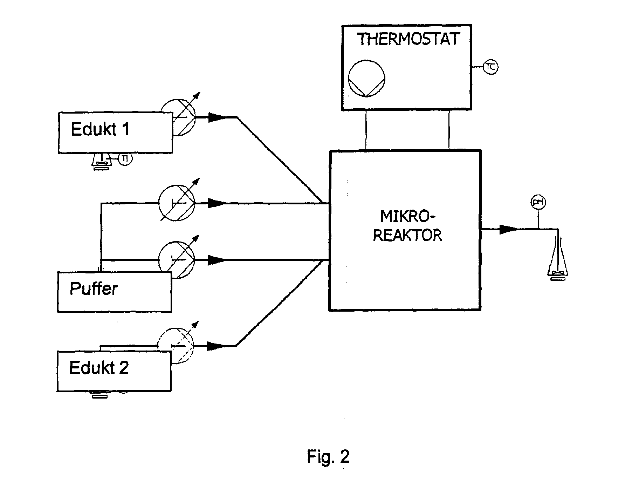

Die sechs aufeinanderliegenden und dicht miteinander verbundenen Blechlagen werden vorzugsweise von oben mit allen Wärmetauscherfluiden und Reaktanden beschickt. Die Abfuhr des Produktes und der Wärmertauscherfluide erfolgt vorzugsweise ebenfalls nach oben. Die eventuelle Zufuhr dritter und vierter an der Reaktion beteiligter Flüssigkeiten (z.B. Pufferlösungen) wird über eine direkt vor dem Reaktor befindliche T-Verzweigung realisiert (Fig. 2), d.h. jeweils ein Reaktant kann vorab mit der Pufferlösung vermischt werden. Die Kontrolle der benötigten Konzentrationen und Flüsse wird vorzugsweise über Präzisionskolbenpumpen und einer computergesteuerten Regelung vorgenommen. Die Reaktionstemperatur wird über integrierte Sensoren überwacht und mit Hilfe der Regelung und eines Thermostaten/Kryostaten überwacht und gesteuert.

Die Herstellung von Mischungen von Einsatzstoffen zu Materialströmen kann auch vorher in Mikromischern oder in vorgeschalteten Vermischungszonen stattfinden. Es können auch Einsatzstoffe in nachgeschalteten Vermischungszonen oder in nachgeschalteten Mikromischern oder -reaktoren zudosiert werden.

Das hier verwendete System ist aus Edelstahl gefertigt; andere Materialien wie zum Beispiel Glas, Keramik, Silizium, Kunststoffe oder andere Metalle sind ebenso einsetzbar.

Für Diazotierungen werden Temperaturen von -10 bis + 80°C, vorzugsweise von -5 bis + 30°C, angestrebt, für Azokupplungen von 0 bis 90°C, vorzugsweise von 10 bis 60°C.

Für die Diazotierungsreaktion als auch für die Azokupplung können den Eduktströmen Pufferlösungen zugeführt werden, vorzugsweise von organischen Säuren und deren Salzen, z.B. Essigsäure/Acetat-Puffer, Zitronensäure/Citrat-Puffer, oder von anorganischen Säuren und deren Salzen, wie z.B. Phosphorsäure/Phosphat oder Kohlensäure/Carbonat.

Durch das erfindungsgemäße Verfahren lassen sich hohe Reaktionsgeschwindigkeiten durch signifikant höhere Reaktionstemperaturen als vergleichsweise im Batchverfahren erzielen. Insbesondere lassen sich temperaturempfindliche Reaktanden, wie z.B. Diazoniumsalze und alkalische Lösungen von 2-Hydroxy-3-naphthoesäure-aryliden, vorteilhaft umsetzen. Durch die hohe Wärmeübertragungsrate während der kurzen Verweilzeit im Mikro- bzw. Minireaktor kann eine kurze thermische Belastung der Reaktanden in einem eng definierbaren Zeitfenster realisiert werden.
Nach dem erfindungsgemäßen Verfahren lassen sich Azofarbmittel herstellen, wie Azopigmente und Azofarbstoffe.

Azopigmente können Monoazo- oder Disazopigmente (verlackt und unverlackt) sein. Es können auch Gemische von Azopigmenten hergestellt werden.

Als Azopigmente kommen insbesondere C.I. Pigment Yellow 1, 3, 12, 13, 14, 16, 17, 65, 73, 74, 75, 81, 83, 97, 111, 120, 126, 127, 151, 154, 155, 174, 175, 176, 180, 181, 183, 191, 194, 198; Pigment Orange 5, 34, 36, 38, 62, 72, 74; Pigment Red 2, 3, 4, 8, 12, 14, 22, 48:1-4, 49:1, 52:1-2, 53:1-3, 57:1, 60:1, 112, 137, 144, 146, 147, 170, 171, 175, 176, 184, 185, 187, 188, 208, 214, 242, 247, 253, 256, 266; Pigment Violet 32; Pigment Brown 25 in Betracht.

Bei den Farbstoffen kommen Dispersions- und auch wasserlösliche anionische und kationische Farbstoffe in Betracht. Insbesondere handelt es sich um Mono-, Dis- oder Polyazofarbstoffe sowie Formazan- oder Anthrachinonfarbstoffe. Bei den wasserlöslichen Farbstoffen handelt es sich insbesondere um die Alkalisalze oder Ammoniumsalze der Reaktivfarbstoffe sowie der sauren Wollfarbstoffe oder substantiven Baumwollfarbstoffe der Azoreihe. Als Azofarbstoffe kommen vorzugsweise metallfreie und metallisierbare Monoazo-, Disazo- und Trisazofarbstoffe, die eine oder mehrere Sulfonsäure- oder Carbonsäuregruppen enthalten, schwermetallhaltige, namentlich kupfer-, chrom- oder kobalthaltige Monoazo-, Disazo- und Trisazofarbstoffe in Betracht. Die Herstellung der Vorstufen für die metallhaltigen Farbstoffe kann nach dem üblichen Verfahren in einem konventionellen Batchverfahren durchgeführt werden. Die anschließende Metallkomplexierungsreaktion z.B. mit Kupferionen wird dann vorzugsweise bei Temperaturen zwischen 30 und 100°C im Mikroreaktor durchgeführt.

Als reaktive Azofarbstoffe kommen insbesondere C.I. Reactive Yellow 15, 17, 37, 57, 160; Reactive Orange 107; Reactive Red 2, 23, 35, 180; Reactive Violet 5; Reactive Blue 19, 28, 203, 220; und Reactive Black 5, 8, 31; in Betracht.

Des weiteren sind insbesondere C.I. Acid Yellow 17, 23; Direct Yellow 17, 86, 98, 132, 157; und Direct Black 62, 168 und 171 nach diesem Verfahren darstellbar.

Es war überraschend und nicht vorhersehbar, dass die Herstellung von Azofarbmitteln in dieser technisch eleganten Weise möglich ist, da bei einem Anfall von Feststoff im Mikroreaktor bislang davon ausgegangen wurde, dass das System verstopft.

Die erfindungsgemäß hergestellten Azopigmente lassen sich zum Pigmentieren von hochmolekularen organischen Materialien natürlicher oder synthetischer Herkunft einsetzen, z.B. von Kunststoffen, Harzen, Lacken, Anstrichfarben oder elektrophotographischen Tonern und Entwicklern, sowie von Tinten und Druckfarben.

Die erfindungsgemäß hergestellten Azofarbstoffe eignen sich zum Färben oder Bedrucken von Hydroxygruppen oder Stickstoffatome aufweisenden natürlichen organischen sowie synthetischen Substraten. Solche Substrate sind beispielsweise synthetische oder natürliche Fasermaterialien, ferner Ledermaterialien, die überwiegend natürliche oder regenerierte Cellulose oder natürliche oder synthetische Polyamide enthalten. Vorzugsweise eignen sie sich zum Färben und Bedrucken von Textilmaterial auf der Basis von Acetat-, Polyester-, Polyamid-, Polyacrylnitril-, PVC- und Polyurethanfasern sowie von Wolle oder insbesondere Baumwolle. Für diesen Zweck können die Farbstoffe auf die Textilmaterialien durch die gewöhnlichen Auszieh-, Klotz- oder Druckverfahren aufgebracht werden.

Die erfindungsgemäß hergestellten Azofarbmittel sind geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäß hergestellten Azofarbmittel geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Azofarbmittel als Farbmittel in Tinten, vorzugsweise Ink-Jet-Tinten, wie z.B. auf wässriger oder nichtwässriger Basis, Mikroemulsionstinten sowie in solchen Tinten, die nach dem hot-melt-Verfahren arbeiten, geeignet.
Ink-Jet-Tinten enthalten im allgemeinen insgesamt 0,5 bis 15 Gew.-%, vorzugsweise 1,5 bis 8 Gew.-%, (trocken gerechnet) einer oder mehrerer der erfindungsgemäßen Verbindungen.
Mikroemulsionstinten basieren auf organischen Lösemitteln, Wasser und ggf. einer zusätzlichen hydrotropen Substanz (Grenzflächenvermittler). Mikroemulsionstinten enthalten 0,5 bis 15 Gew.-%, vorzugsweise 1,5 bis 8 Gew.-%, einer oder mehrerer der erfindungsgemäßen Verbindungen, 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 15 Gew.-% einer oder mehrerer erfindungsgemäßer Verbindungen, 85 bis 99,5 Gew.-% organisches Lösungsmittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im wesentlichen aus 20 bis 90 Gew.-% Wachs und 1 bis 10 Gew.-% einer oder mehrerer der erfindungsgemäßen Verbindungen. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein. Typische Zusatzstoffe und Hilfsmittel sind z.B. in US-PS 5,560,760 beschrieben.

Außerdem sind die erfindungsgemäß hergestellten Azofarbmittel auch geeignet als Farbmittel für Farbfilter, sowohl für die additive wie für die subtraktive Farberzeugung.

In den nachstehenden Beispielen beziehen sich Prozentangaben auf Gewichtsprozente.

Beispiel 1 C.I. Pigment Red 2:
a) Herstellung einer Diazoniumsalzlösung:
   In einem 500 ml-Dreihalskolben werden 14,6 g festes 2,5-Dichloranilin in 25,1 ml Wasser vorgelegt und mit 30,8 ml einer 31%igen Salzsäure versetzt. Nach 8-stündigem Rühren bei RT erhält man eine Hydrochloridlösung. Nach der Zugabe von weiteren 25,1 ml Wasser und 3,75 ml einer 60%igen Essigsäure wird das Reaktionsgemisch auf -5°C abgekühlt. Bei dieser Temperatur werden in ca. 15 min 11,5 ml einer 40%igen Natriumnitrit-Lösung zum Reaktionsgemisch zugetropft und für weitere 60 min bei 0°C weitergerührt.
   Zur Klärung des Reaktionsgemisches werden sechs Spatelspitzen Celite zugefügt und rasch abgesaugt. Die gelbliche Diazoniumsalzlösung wird mit Wasser auf 300 ml Gesamtvolumen (-0,3 M) aufgefüllt.
b) Herstellung einer Lösung der Kupplungskomponente:
   In einem zweiten Kolben werden 23,9 g Naphtol AS in 50,2 ml Wasser vorgelegt und mit 26,7 ml einer 25%igen Natronlauge versetzt. Dieses Gemisch wird dann bei 60°C für 120 min gerührt und in Lösung gebracht. Sie wird rasch abgesaugt und ebenfalls mit Wasser auf 300 ml Gesamtvolumen (∼0,3 M) aufgefüllt.
c) Azokupplung im Mikroreaktor
   Die auf konventionellem Wege dargestellten Diazonium-Salz- und Naphtol-Lösungen werden über kalibrierte Kolbenpumpen mit einer Flussrate von jeweils 6 ml/min in die jeweiligen Edukteingänge des Mikroreaktors gepumpt. Die eigentliche Azokupplung findet im Reaktorraum statt. Um eine Pufferwirkung zu erzielen, werden diese Edukt-Lösungen kurz vor den Reaktoreingängen mit einer Essigsäure-Lösung (4 ml 60%iger Essigsäure und 600 ml Wasser) verdünnt. Die Essigsäurelösung wird ebenfalls mit Hilfe von kalibrierten Kolbenpumpen über eine T-Verzweigung mit einer Flussrate von jeweils 6 ml/min in die Eduktzuleitungen des Mikroreaktors gefördert. An dem Wärmetauscher-Kreislauf des Mikroreaktors ist ein Thermostat angeschlossen, der eine Reaktionstemperatur von 40°C einstellt. Der pH-Wert der Produktsuspension beträgt am Reaktorausgang ca. 3. Die aus dem Reaktor austretende Produkt-Suspension wird in einem Kolben gesammelt, abgesaugt und mit Wasser neutral gewaschen. Das feuchte C.I. Pigment Red 2 wird bei 65°C getrocknet.

### Beispiel 2

### a) Herstellung einer Hydrochloridlösung von 2,5-Dichloranilin

In einem 500 ml-Dreihalskolben werden 14,6 g festes 2,5-Dichloranilin in 25,1 ml Wasser vorgelegt und mit 30,8 ml einer 31 %igen Salzsäure versetzt und 8 Stunden bei Raumtemperatur gerührt. Nach der Zugabe von weiteren 25,1 ml Wasser und 3,75 ml einer 60%igen Essigsäure wird die Lösung auf -5°C abgekühlt.

### b) Lösung von Naphtol AS

In einem Kolben werden 23,9 g Naphtol AS in 50,2 ml Wasser vorgelegt und mit 26,7 ml einer 25%igen Natronlauge versetzt. Dieses Gemisch wird dann bei 60°C für 120 min gerührt und in Lösung gebracht. Sie wird rasch abgesaugt und ebenfalls mit Wasser auf 300 ml Gesamtvolumen (∼0,3 M) aufgefüllt.

### c) Verdünnte Natriumnitrit-Lösung

Es wird eine 1 N wässrige Natriumnitritlösung hergestellt.

### d) Pufferlösung

Eine Pufferlösung wird aus 4 ml 60%iger Essigsäure und 600 ml Wasser hergestellt.

### e) Diazotierung von 2,5-Dichloranilin im Mikroreaktor

Die unter a) hergestellte Lösung des 2,5-Dichloranilin-Hydrochlorid wird auf 100 ml eingestellt. Die Eduktlösung und die 1N Natriumnitrit-Lösung aus c) werden über kalibrierte Kolbenpumpen mit einer Flussrate von jeweils 12 ml/min in die jeweiligen Edukteingänge des Mikroreaktors gepumpt. Die Diazotierungsreaktion findet im Reaktorraum statt. An dem Wärmetauscher-Kreislauf des Mikroreaktors ist ein Thermostat angeschlossen, der die gewünschte Reaktionstemperatur von etwa 5°C einstellt. Die aus dem Reaktor austretende Reaktionslösung wird in einem Auffanggefäß mit Wasser auf 300 ml aufgefüllt und eventuell vorhandenes, überschüssiges Natriumnitrit mit Amidosulfonsäure zerstört. Die Diazoniumsalzlösung (∼0,3 M) wird zur Azokupplung entweder in einem nachgeschalteten Mikroreaktor oder in einem Reaktionsgefäß nach konventionellen Verfahren eingesetzt.

### f) Azokupplung zu C.I. Pigment Red 2 im Mikroreaktor

Die durch Diazotierung im Mikroreaktor hergestellte Diazoniumsalzlösung sowie die Naphtol AS-Lösung aus b) werden über kalibrierte Kolbenpumpen mit einer Flussrate von jeweils 6 ml/min in die jeweiligen Edukteingänge des Mikroreaktors gepumpt. Die eigentliche Azokupplung findet im erwähnten Reaktorraum statt. Um eine Pufferwirkung zu erzielen, werden diese Edukt-Lösungen kurz vor den Reaktoreingängen mit einem nach d) hergestellten Essigsäure-Puffer verdünnt. Die Pufferlösung wird ebenfalls mit Hilfe von kalibrierten Kolbenpumpen über eine T-Verzweigung mit einer Flussrate von jeweils 6 ml/min in die Eduktzuleitungen des Mikroreaktors gefördert. An dem Wärmetauscher-Kreislauf des Mikroreaktors ist ein Thermostat angeschlossen, der die gewünschte Reaktionstemperatur von etwa 40°C einstellt. Der pH-Wert der Produktsuspension beträgt am Reaktorausgang ca. 3. Die aus dem Reaktor austretende Produkt-Suspension wird in einem Kolben gesammelt, abgesaugt und mit Wasser neutral gewaschen. Das feuchte Pigment wird bei 65°C getrocknet.

### Beispiel 3 C.I. Pigment Yellow 191

### a) Herstellung einer Suspension von 2B-Säure-Hydrochlorid

In einem 500 ml-Dreihalskolben werden 46,2 g feste 2B-Säure(95,6%) (5-Amino-3-chlor-2-methyl-benzolsulfonsäure) in 400 ml Wasser vorgelegt und mit 18,1 ml einer 33 %igen Natronlauge versetzt. Das Gemisch wird dann auf 90°C erhitzt. Nach Zugabe von 1,6 g Celite und nach weiterem Rühren bei 90°C wird heiß abfiltriert. Durch Zugabe von 92,8 ml einer 20 %igen Salzsäure zum Filtrat wird das Amin-Hydrochlorid ausgefällt.

### b) Konventionelle Diazotierung

Die 2B-Säure-Hydrochlorid Suspension wird mit 26,6 ml einer 40 %igen Natriumnitrit-Lösung bei 20°C diazotiert. Zunächst wird das Nitrit schnell zudosiert, die restliche Menge wird so zugegeben, dass stets ein leichter Nitritüberschuss nachweisbar ist. Die fertige Diazoniumsalzsuspension wird mit Wasser auf 1500 ml Gesamtvolumen (ca. 0,13 molar) eingestellt.

### c) Diazotierung von 2B-Säure im Mikroreaktor

Die nach a) hergestellte Suspension von 2B-Säure-Hydrochlorid wird auf 1000 ml eingestellt. Die Suspension wird mit einer Flussrate von 40 ml/min und eine 40%ige Natriumnitrit-Lösung mit einer Flussrate von 1 ml/min über kalibrierte Kolbenpumpen in die jeweiligen Edukteingänge des Mikroreaktors gepumpt. Die Diazotierungsreaktion findet im Reaktorraum statt. An dem Wärmetauscher-Kreislauf des Mikroreaktors ist ein Thermostat angeschlossen, der die gewünschte Reaktionstemperatur von etwa 20°C einstellt. Die aus dem Reaktor austretende Reaktionslösung wird im Auffanggefäß unter leichtem Nitritüberschuss eine Stunde gerührt. Mit Wasser wird auf 1500 ml aufgefüllt und eventuell vorhandenes, überschüssiges Natriumnitrit mit Amidosulfonsäure zerstört. Die Diazoniumsalzlösung (∼0,13 M) wird zur Azokupplung entweder in einem nachgeschalteten Mikroreaktor oder in einem Reaktionsgefäß nach konventionellen Verfahren eingesetzt.

### d) Lösung von Pyrazolsäure-3 (3-(3-Methyl-5-oxo-4,5-dihydro-pyrazol-1-yl)-benzolsulfonsäure)

In einem Kolben werden 400 ml Wasser vorgelegt und 57,7 g Pyrazolsäure-3 zugegeben. Zum Lösen werden 22,2 ml einer 33 %igen Natronlauge zugesetzt. Für die Kupplung wird sie mit Wasser auf ein Gesamtvolumen von 750 ml bzw. 0,26 M eingestellt und auf 40°C erwärmt.

### e) Azokupplung im Mikroreaktor

Die unter b) oder c) hergestellte Diazoniumsuspension wird mit einer Flussrate von 20 ml/min sowie die Pyrazolsäure-3-Lösung d) mit einer Flussrate von 10 ml/min über kalibrierte Kolbenpumpen in die jeweiligen Edukteingänge des Mikroreaktors gepumpt. Die eigentliche Azokupplung findet im erwähnten Reaktorraum statt. Die Umsetzung erfolgt bei einer Reaktionstemperatur von 40°C und einem pH-Wert von 6,3. Die Pigmentsuspension wird für 60 min bei 40°C nachgerührt. Danach wird sie auf 80°C erhitzt und für 15min bei dieser Temperatur gehalten. Pro Mol Pigment wird eine Lösung aus 1,7 Mol CaCl₂, 61 Mol Wasser, 0,0075 Mol Natronlauge und 0,01 Mol Stearinsäure hergestellt und zu der Pigmentsuspension zugegeben. Bei 80°C wird für 2 Stunden gerührt, anschließend auf 70°C abkühlen gelassen und mit Wasser gewaschen.

### f) Verlackung zu Pigment Yellow 191 im Mikroreaktor

Die Pigmentsuspension wird auf 2500 ml aufgefüllt, auf 80°C erhitzt und unter Rühren für 15 min bei dieser Temperatur gehalten.

In einem 400 ml Becherglas werden 33,4 g 77%iges Calciumchlorid in 250 ml Wasser gelöst.
Die Pigmentsuspension wird mit einer Flussrate von 90 ml/min und die Calciumchloridlösung mit einer Flussrate von 9 ml/min über kalibrierte Kolbenpumpen in die jeweiligen Edukteingänge des Mikroreaktors gepumpt. Der Thermostat des Wärmetauscher-Kreislauf des Mikroreaktors wird auf eine Reaktionstemperatur von 85°C einstellt. Die aus dem Reaktor austretende Pigmentsuspension wird in einem Vorratsgefäß aufgefangen.

### Beispiel 4 C.I. Pigment Red 53:1

### a) Herstellung einer Suspension von CLT-Säure-Hydrochlorid (2-Amino-5-chlor-4-methyl-benzolsulfonsäure)

In einem 500 ml-Dreihalskolben werden 44,6 g feste CLT-Säure (99 %) in 250 ml Wasser vorgelegt und mit 31 ml einer 31 %igen Salzsäure versetzt. Das Gemisch wird 30 min rühren gelassen.

### b) Konventionelle Diazotierung

Die CLT-Säure-Hydrochlorid Suspension wird mit 26,6 ml einer 40 %igen Natriumnitrit-Lösung bei 20°C diazotiert. Zunächst wird das Nitrit schnell zudosiert, die restliche Menge wird so zugegeben, dass stets ein leichter Nitritüberschuss nachweisbar ist. Die fertige Diazoniumsalzsuspension wird mit Wasser auf 1500 ml Gesamtvolumen (0,13 M) eingestellt.

### c) Diazotierung von CLT-Säure im Mikroreaktor

Die unter a) hergestellte Suspension von CLT-Säure-Hydrochlorid wird auf 1000 ml eingestellt. Die Suspension wird mit einer Flussrate von 40 ml/min und eine 40 %ige Natriumnitrit-Lösung mit einer Flussrate von 1 ml/min über kalibrierte Kolbenpumpen in die jeweiligen Edukteingänge des Mikroreaktors gepumpt. Die Diazotierungsreaktion findet im Reaktorraum statt. An dem Wärmetauscher-Kreislauf des Mikroreaktors ist ein Thermostat angeschlossen, der die gewünschte Reaktionstemperatur von etwa 15°C einstellt. Die aus dem Reaktor austretende Reaktionslösung wird auf 20°C bei leichtem Nitritüberschuss erwärmt. Nach einer Verweilzeit von 60 min wird mit Wasser auf 1500 ml aufgefüllt und eventuell vorhandenes, überschüssiges Natriumnitrit mit Amidosulfonsäure zerstört. Die Diazoniumsalzlösung (∼0,13 M) wird zur Azokupplung entweder in einem nachgeschalteten Mikroreaktor oder in einem Reaktionsgefäß nach konventionellen Verfahren eingesetzt.

### d) Lösung von β-Naphthol

In einem Kolben werden 400 ml Wasser vorgelegt und 28,1 g β-Naphthol gegeben. Zum Lösen werden 24,2 ml einer 33%igen Natronlauge zugesetzt. Für die Kupplung wird sie mit Wasser auf ein Gesamtvolumen von 750 ml bzw. 0,26 M eingestellt und auf 40°C erwärmt.

### e) Azokupplung im Mikroreaktor

Die unter b) oder c) hergestellte Diazoniumsuspension wird mit einer Flussrate von 20 ml/min sowie die β-Naphthol-Lösung d) mit einer Flussrate von 10 ml/min über kalibrierte Kolbenpumpen in die jeweiligen Edukteingänge des Mikroreaktors gepumpt. Die eigentliche Azokupplung findet im erwähnten Reaktorraum statt. Die Umsetzung erfolgt bei einer Reaktionstemperatur von 40 bis 50°C und einem pH-Wert von 7,5. Die Pigmentsuspension wird für 30 min bei 40°C und pH 7,5 nachgerührt.
Die Pigmentausbeute kann man durch folgende Variation von 96% auf 99 % gesteigert werden: Die Pigmentsuspension wird im Auffanggefäß mit 33 %iger Salzsäure auf pH 2,0 eingestellt. Nach einer Verweilzeit von ca. 10-15 min im Auffanggefäß wird die Pigmentsuspension in einen weiteren Mikroreaktor gepumpt. Durch den zweiten Edukteingang wird soviel 10%ige Natronlauge gepumpt, dass sich nach der Durchmischung im Reaktor am Ausgang ein pH von 7,5 einstellt. Anschließend wird wie oben verfahren d.h. für 30 min bei 40°C und pH 7,5 nachgerührt.

### f) Verlackung zu Pigment Red 53:1 im Mikroreaktor

Die Pigmentsuspension wird auf 2500 ml aufgefüllt, auf 80°C erhitzt und unter Rühren für 15 min bei dieser Temperatur gehalten.
In einem 400 ml Becherglas werden in 250 ml Wasser 29 g Bariumchlorid x 2 H₂O gelöst.
Die Pigmentsuspension wird mit einer Flussrate von 90 ml/min und die Bariumchloridlösung mit einer Flussrate von 9 ml/min über kalibrierte Kolbenpumpen in die jeweiligen Edukteingänge des Mikroreaktors gepumpt. Der Thermostat des Wärmetauscher-Kreislauf des Mikroreaktors wird auf eine Reaktionstemperatur von 85-95°C einstellt. Die aus dem Reaktor austretende Pigmentsuspension wird in einem Vorratsgefäß aufgefangen.

### Beispiel 5: Wasserlösliche Reaktivfarbstoffe

### Reactive Orange 107

### a) Diazotierung Parabaseester (konventionell)

### 1.) Diazotierung von Parabaseester([2-(4-Amino-benzensulfonyl)-ethyl]-schwefelsäureester)

In ein 500 ml Becherglas werden 25,5 g [2-(4-Amino-benzensulfonyl)-ethyl]-schwefelsäureester unter Rühren in 200 g Wasser eingetragen. Es werden 36 g 31 %ige Salzsäure zugetropft und 30 min gerührt. Die Suspension wird auf 0 bis -5°C abgekühlt. Etwa 20 g 5N-Natriumnitritlösung werden bei dieser Temperatur über 30 min zugetropft. Es wird noch 1-2 Stunden bei ca. 5°C nachgerührt. Überschüssiges Nitrit wird mit Amidosulfonsäure zerstört. Es wird mit Wasser auf 300 ml aufgefüllt (0,3 M).

### 2.) Lösung von 4-Acetylamino-2-amino-benzensulfonsäure

21 g 4-Acetylamino-2-amino-benzensulfonsäure werden zu 250 g Wasser gegeben und mit festem Natriumbicarbonat auf pH 4,3 gestellt. Die Lösung wird abgesaugt, auf ein Volumen von 300 ml mit Wasser aufgefüllt (∼ 0,3 M) und auf 50°C erwärmt.

### 3.) Pufferlösung

Eine Pufferlösung wird aus 75 g Essigsäure (100 %) und 66 g Natriumacetat (wasserfrei) in 800 g Wasser hergestellt.

### b) Azokupplung im Mikroreaktor

Die auf konventionellem Wege unter a1) hergestellte Suspension der Diazoniumkomponente sowie die Lösung von 4-Acetylamino-2-aminobenzensulfonsäure a2) werden über kalibrierte Kolbenpumpen mit einer Flussrate von jeweils 6 ml/min in die jeweiligen Edukteingänge des Mikroreaktors gepumpt. Die eigentliche Azokupplung findet im erwähnten Reaktorraum statt. Um den erforderlichen pH-Wert von 4-4,5 für die Azokupplung zu erzielen, werden diese Edukt-Lösungen kurz vor den Reaktoreingängen mit einem nach a3) hergestellten Essigsäure/Natriumacetat-Puffer verdünnt. Die Pufferlösung wird ebenfalls mit Hilfe von kalibrierten Kolbenpumpen über eine T-Verzweigung mit einer Flussrate von jeweils 6 ml/min in die Eduktzuleitungen des Mikroreaktors gefördert. An dem Wärmetauscher-Kreislauf des Mikroreaktors ist ein Thermostat angeschlossen, der die gewünschten Reaktionstemperaturen von 50°C einstellt. Der pH-Wert der Produktsuspension liegt am Reaktorausgang zwischen 3,8-4,5. Die aus dem Reaktor austretende Farbstofflösung wird in einem Kolben gesammelt, mit Natriumbicarbonat auf pH 5,5-6,0 gestellt und klärfiltriert. Der reaktive Azofarbstoff wird durch Eindampfen oder Sprühtrocknen isoliert.

## Patentansprüche

1. Verfahren zur Herstellung von Azofarbmitteln, **dadurch gekennzeichnet, dass** man einen oder mehrere der Schritte a) Diazotierung aromatischer oder heteroaromatischer Amine, b) Azokupplung, c) Verlackung oder d) Metallkomplexierung in einem Mikroreaktor durchführt.

2. Verfahren zur Herstellung von Azopigmenten nach Anspruch 1, **dadurch gekennzeichnet, dass** man die Diazotierung aromatischer oder heteroaromatischer Amine oder die Azokupplungsreaktion oder die Verlackung, oder die Diazotierung und die Azokupplungsreaktion, oder die Diazotierung und die Azokupplungsreaktion und die Verlackung in einem Mikroreaktor durchführt.

3. Verfahren zur Herstellung von Azofarbstoffen nach Anspruch 1, **dadurch gekennzeichnet, dass** man die Diazotierung aromatischer oder heteroaromatischer Amine oder die Azokupplungsreaktion oder die Metallkomplexierungsreaktion, oder die Diazotierung und die Azokupplungsreaktion, oder die Diazotierung und die Azokupplungsreaktion und Metallkomplexierungsreaktion in einem Mikroreaktor durchführt.

4. Verfahren nach einem oder mehreren der Ansprüche 1 bis 3, **dadurch gekennzeichnet, dass** man die Ausgangsprodukte dem Mikroreaktor in Form einer Lösung zuführt.

5. Verfahren nach einem oder mehreren der Ansprüche 1 bis 3, **dadurch gekennzeichnet, dass** man die Ausgangsprodukte dem Mikroreaktor in Form einer Suspension zuführt.

6. Verfahren nach mindestens einem der Ansprüche 1 bis 5, **dadurch gekennzeichnet, dass** man eine Lösung oder Suspension eines aromatischen oder heteroaromatischen Amins oder dessen Ammoniumsalz, sowie eine Lösung oder Suspension eines Diazotierungsmittels kontinuierlich in den Mikroreaktor einleitet, im Innern des Mikroreaktors kontinuierlich miteinander vermischt und zur Reaktion bringt.

7. Verfahren nach mindestens einem der Ansprüche 1 bis 6, **dadurch gekennzeichnet, dass** man eine Lösung oder Suspension eines kupplungsfähigen Diazoniumsalzes, sowie eine Lösung oder Suspension einer Azokupplungskomponente kontinuierlich in den Mikroreaktor einleitet, im Innern des Mikroreaktors kontinuierlich miteinander vermischt und zur Reaktion bringt.

8. Verfahren nach mindestens einem der Ansprüche 1 bis 7, **dadurch gekennzeichnet, dass** man eine Lösung oder Suspension eines säuregruppenhaltigen Azofarbmittels, sowie eine Lösung oder Suspension eines Metallsalzes kontinuierlich in den Mikroreaktor einleitet, im Innern des Mikroreaktors kontinuierlich miteinander vermischt und zur Reaktion bringt.

9. Verfahren nach mindestens einem der Ansprüche 1 bis 8, **dadurch gekennzeichnet, dass** man zur Durchführung der Diazotierung und der anschließenden Azokupplung zwei oder mehrere Mikroreaktoren hintereinanderschaltet oder Mikroreaktoren mit zwei oder mehreren Reaktionszonen verwendet.

10. Verfahren nach mindestens einem der Ansprüche 1 bis 9, **dadurch gekennzeichnet, dass** die eingeleiteten Lösungen oder Suspensionen im Innern des Mikroreaktors mit Hilfe eines oder mehrerer Wärmetauscher auf Reaktionstemperatur gebracht werden.

11. Verfahren nach mindestens einem der Ansprüche 1 bis 10, **dadurch gekennzeichnet, dass** die Suspensionen in einer kontinuierlichen Bahn ohne Ecken oder mit abgerundeten Ecken durch den Mikroreaktor geleitet werden.

12. Verfahren nach mindestens einem der Ansprüche 1 bis 11, **dadurch gekennzeichnet, dass** ein oder mehrere der Reaktanden vor Eintritt in den Mikroreaktor über eine T-Verzweigung kontinuierlich mit einer weiteren Flüssigkeit, bevorzugt einer Pufferlösung, vermischt werden.

13. Verfahren nach mindestens einem der Ansprüche 1 bis 12, **dadurch gekennzeichnet, dass** die Konzentrationen, pH-Werte, Flussraten und Temperaturen über im Mikroreaktor integrierte Sensoren und Regelkreise erfasst und kontrolliert werden.

## Claims

1. A process for preparing azo colorants, which comprises conducting one or more of a) diazotization of aromatic or hetaromatic amines, b) azo coupling, c) laking and d) metal complexing in a microreactor.

2. The process of claim 1 for preparing azo pigments, wherein the diazotization of aromatic or hetaromatic amines or the azo coupling reaction or the laking or the diazotization and the azo coupling reaction or the diazotization and the azo coupling reaction and the laking are carried out in a microreactor.

3. The process of claim 1 for preparing azo dyes, wherein the diazotization of aromatic or hetaromatic amines or the azo coupling reaction or the metal complexing reaction or the diazotization and the azo coupling reaction or the diazotization and the azo coupling reaction and the metal complexing reaction are carried out in a microreactor.

4. The process of one or more of claims 1 to 3, wherein the starting products are fed to the microreactor in the form of a solution.

5. The process of one or more of claims 1 to 3, wherein the starting products are fed to the microreactor in the form of a suspension.

6. The process of at least one of claims 1 to 5, wherein a solution or suspension of an aromatic or hetaromatic amine or its ammonium salt and also a solution or suspension of a diazotizing agent are continuously introduced into the microreactor, continuously mixed with each other in the microreactor and reacted.

7. The process of at least one of claims 1 to 6, wherein a solution or suspension of a coupleable diazonium salt and also a solution or suspension of an azo coupling component are continuously introduced into the microreactor, continuously mixed with each other in the microreactor and reacted.

8. The process of at least one of claims 1 to 7, wherein a solution or suspension of an azo colorant that contains acid groups and also a solution or suspension of a metal salt are continuously introduced into the microreactor, continuously mixed with each other in the microreactor and reacted.

9. The process of at least one of claims 1 to 8, wherein the diazotization and subsequent azo coupling are conducted using two or more microreactors connected in series or microreactors having two or more reaction zones.

10. The process of at least one of claims 1 to 9, wherein the introduced solutions or suspensions are brought to the reaction temperature in the interior of the microreactor by means of one or more heat exchangers.

11. The process of at least one of claims 1 to 10, wherein the suspensions are passed through the microreactor in a continuous path without corners or with rounded corners.

12. The process of at least one of claims 1 to 11, wherein one or more of the reactants, before being introduced into the microreactor, are continuously mixed with a further liquid, preferably buffer solution, via a T-junction.

13. The process of at least one of claims 1 to 12, wherein the concentrations, pH values, flow rates and temperatures are captured and policed via sensors and control circuits integrated in the microreactor.

## Revendications

1. Procédé pour la préparation de colorants azoïques, **caractérisé en ce qu'**on réalise une ou plusieurs des étapes de a) diazotation d'amines aromatiques ou hétéro-aromatiques, b) copulation azoïque, c) formation de pigments ou d) complexation d'un métal dans un microréacteur.

2. Procédé pour la préparation de pigments azoïques selon la revendication 1, **caractérisé en ce qu'**on réalise la diazotation d'amines aromatiques ou hétéro-aromatiques ou la réaction de copulation azoïque ou la formation de pigments, ou la diazotation et la réaction de copulation azoïque, ou la diazotation et la réaction de copulation et la formation de pigment dans un microréacteur.

3. Procédé pour la préparation de colorants azoïques selon la revendication 1, **caractérisé en ce qu'**on réalise la diazotation d'amines aromatiques ou hétéro-aromatiques ou la réaction de copulation azoïque ou la réaction de complexation d'un métal, ou la diazotation et la réaction de copulation azoïque, ou la diazotation et la réaction de copulation azoïque et la réaction de complexation d'un métal dans un microréacteur.

4. Procédé selon une ou plusieurs des revendications 1 à 3, **caractérisé en ce qu'**on introduit les produits de départ dans le microréacteur sous la forme d'une solution.

5. Procédé selon une ou plusieurs des revendications 1 à 3, **caractérisé en ce qu'**on introduit les produits de départ dans le microréacteur sous la forme d'une suspension.

6. Procédé selon au moins une des revendications 1 à 5, **caractérisé en ce qu'**on introduit dans le microréacteur une solution ou une suspension d'une amine aromatique ou hétéro-aromatique ou de son sel d'ammonium, ainsi qu'une solution ou une suspension d'un agent de diazotation en continu dans le microréacteur, on mélange les produits en continu à l'intérieur du microréacteur et on les amène à réagir.

7. Procédé selon au moins une des revendications 1 à 6, **caractérisé en ce qu'**on introduit en continu dans le microréacteur une solution ou une suspension d'un sel de diazonium approprié à la copulation, ainsi qu'une solution ou une suspension d'un composant de copulation azoïque, on mélange les produits en continu à l'intérieur du microréacteur et on les amène à réagir.

8. Procédé selon au moins une des revendications 1 à 7, **caractérisé en ce qu'**on introduit en continu dans le microréacteur une solution ou une suspension d'un colorant azoïque contenant des groupes acides, ainsi qu'une solution ou une suspension d'un sel métallique, on mélange les produits en continu à l'intérieur du microréacteur et on les amène à réagir.

9. Procédé selon au moins une des revendications 1 à 8, **caractérisé en ce qu'**on relie les uns derrière les autres deux microréacteurs ou plus avec deux zones de réaction ou plue pour la réalisation de la diazotation et de la copulation azoïque annexée.

10. Procédé selon au moins une des revendications 1 à 9, **caractérisé en ce qu'**on amène à la température de réaction les solutions ou suspensions introduites à l'intérieur du microréacteur au moyen d'un ou de plusieurs échangeurs de chaleur.

11. Procédé selon au moins une des revendications 1 à 10, **caractérisé en ce qu'**on introduit à travers le microréacteur les suspensions en un chemin continu sans coins ou avec des bords arrondis.

12. Procédé selon au moins une des revendications 1 à 11, **caractérisé en ce qu'**on mélange un ou plusieurs des réactifs avant l'entrée dans le microréacteur en continu via un branchement en T avec un autre liquide, de préférence une solution tampon.

13. Procédé selon au moins une des revendications 1 à 12, **caractérisé en ce qu'**on détecte et on régule les concentrations, les valeurs de pH, les débits d'écoulement et les températures au moyen de capteurs et de boucles de régulation intégrées dans le microréacteur.
